# EUROPEAN PATENT SPECIFICATION

(11) **EP 2 702 267 B1**
(45) Date of publication and mention of the grant of the patent: **23.03.2016**
(21) Application number: 12720832.0
(22) Date of filing: 27.04.2012
(51) Int. Cl.: F03D 1/06, F03D 80/00, F03D 7/02

(54) **ROTATIONAL SUPPORT OF A WIND TURBINE BLADE**
ROTIERENDER TRÄGER EINER WINDTURBINENSCHAUFEL
SUPPORT ROTATIF POUR UNE PALE D'ÉOLIENNE

(30) Priority: 27.04.2011 WO PCT/EP2011/002112
(43) Date of publication of application: 05.03.2014
(73) Proprietor: Aktiebolaget SKF (publ), 415 50 Göteborg (SE)
(72) Inventor: BLOM, Johannes, NL-3439MT Nieuwegein (NL); KLEINMEULEMAN, Peter, NL-5912 TA Venlo (NL)
(74) Representative: Burö, Sven Peter
(86) International application number: PCT/EP2012/057849
(87) International publication number: WO 2012/146752

(56) References cited:
- EP-A2- 2 253 841
- WO-A2-2007/112748
- US-A1- 2003 116 970
- US-A1- 2007 231 137
- US-A1- 2009 148 285

## Description

### TECHNICAL FIELD

The present invention relates to a bearing assembly adapted to be used for the pitch adjustment of a wind turbine blade.

### BACKGROUND ART

Wind turbines are designed to convert wind into electricity, by turning a generator positioned in a wind turbine housing, also known as a nacelle. The rotation of the generator is achieved by wind turbine blades, normally three, that rotate by the wind. In order to be able to optimize the output power of the wind turbine, the blades may be rotated around their longitudinal axis. In this way, the blades can be used to control the amount of wind power transferred from the wind to the generator.

In conventional wind turbines, a slewing bearing is often used for rotational support of each turbine blade. The outer ring of the bearing is mounted to the hub with many bolts, typically 50 to 80 bolts, which are pre-tensioned according to specification. When the blade is assembled, it is mounted to the inner ring with a matching number of bolts that are also pre-tensioned according to specification. Such a bearing may be a roller bearing having a diameter in the same order as the outer diameter of the blade root. The large diameter of the bearing means that its rotation generates a relatively large amount of friction torque. In pitch control, moreover, the angular adjustment is a back and forth oscillating motion, through angles much lower than 360 degrees. A slewing bearing is not optimally adapted for oscillations.

Also, the pitch bearing is exposed to several different kinds of load, both static and dynamic. The loads include radial and axial forces and a bending moment due to the length and mass of the blade. An example of a horizontal axis turbine comprising a dual-system pitch drive unit is disclosed in EP 2253841 A. A further example of a pitch bearing is known from WO 2007/112748, which discloses a bearing with a first and second axial row of rolling elements and at least one radial row of bearing elements, positioned outside of an area defined by the first and second axial row. Such a bearing is better adapted for supporting a combination of axial and radial loads, but is not particularly suited for oscillating pitch motions.

Consequently, there is room for improvement.

### DISCLOSURE OF INVENTION

To optimise the power output of a wind turbine generator, large wind turbines are often equipped with active stall control and active pitch control. To generate a high torque in low-to-medium wind conditions, the turbine blades are pitched into the wind, to catch as much wind as possible. If the wind speed increases and the generator is in danger of being overloaded, the blade angle of attack is altered. In stall control, the angle of attack of each blade is increased. In a fully stalled condition, a flat side of the blade faces directly into the wind. The range of blade angular motion that is required to stall the blades, if necessary, is approximately 30 degrees. In other words, 15 degrees in each direction, relative to a rotational midpoint.

Pitch control may also be applied, whereby the blade angle of attack is decreased. If the wind speed becomes too high, or if the hub rotor is to be shut down due to a failure or in order to perform maintenance, the blades are rotated to a "parked" position. In this position, the edge of each blade faces the wind. The required range of blade angular motion in is this instance is approximately 90 degrees.

During operation, once the blades have been rotated to the appropriate angle for the wind conditions, the pitch angle of each blade is finely adjusted, to compensate for the different wind load acting on each blade as it rotates around a main shafts axis of the hub. As a result of fine pitch adjustment, power output of the generator can be maintained in an optimal range. For fine pitch adjustment, the blades are rotatable relative to the hub through an angle of approximately 10 degrees. In other words, 5 degrees in each direction, relative to the rotational midpoint.

Thus, two modes of operation can be identified with respect to blade angular adjustment:
A first mode of operation, for fine pitch adjustments, in which the pitch angle is small and pitching speed is high. For example, the blade may be rotated through an angle of 5 degrees in one second.
A second mode of operation, for coarse pitch adjustments, in which blade position is adjusted to compensate for deviations in the wind speed, or to place the hub in a parked position. In this mode, the pitch angle adjustment is large (up to approximately 90 degrees) and the pitching speed relatively slow. For example, each blade may be rotated through an angle of 15 degrees in around ten seconds.

When the wind turbine is in use, pitch angle adjustment in the first mode of operation occurs much more frequently than in the second mode. Typically, fine adjustment takes place once every few seconds, while the larger, positional adjustments occur e.g. once every few minutes. In essence, the first mode of operation can be viewed as a high-frequency, short-stroke angular adjustment. The second mode of operation can be viewed as a semi-static, long-stroke angular adjustment.

The invention is based on the understanding that the different types of rotational motion which a blade undergoes require different types of rotational support. The invention is further based on optimising the different types of rotational support for the different types of load that act on turbine blade during use.

Specifically, the invention resides in an assembly for rotationally supporting a wind turbine blade relative to a wind turbine hub, whereby the assembly comprises a first bearing arrangement, which is adapted to for fine pitch adjustments, and comprises a second bearing arrangement, which is adapted for coarse pitch adjustments.

The assembly further comprises an intermediate ring, axially positioned between the blade and hub, which has a diameter essentially equal to a blade root diameter. The blade is mounted to the intermediate ring via one of the first and second bearing arrangements, and the intermediate ring is mounted to the hub via the other of the first and second bearing arrangements. In the first mode of operation, pitch angle is adjusted by rotating the blade via the first bearing arrangement. In the second mode of operation, pitch angle is adjusted by rotating the blade via the second bearing arrangement. Thus, a dedicated bearing solution can be assigned for each mode of operation, leading to an extended life of the assembly as a whole.

Preferably, the blade is mounted to the intermediate ring via the first bearing arrangement and the intermediate ring is mounted to the hub via the second bearing arrangement.

Suitably, the first bearing arrangement comprises a type of bearing which is designed to permit only a limited amount of relative rotation between the blade and the intermediate ring, given that this is all that is required in the first mode of operation. As a result, the bearing can be optimised for high-frequency, short-stroke adjustments.

In one embodiment, the first bearing arrangement comprises an elastomeric bearing, whereby a first part of the elastomeric bearing is connected to the intermediate ring and a second part of the elastomeric bearing is connected to the blade. Such a bearing has high axial and radial stiffness, but a low torsional stiffness, thereby permitting the high-frequency, short-stroke adjustments of up to approx. 5 degrees which is required in the first mode of operation.

According to the invention, the first bearing arrangement comprises at least three rods. A first end of each rod is connected to the intermediate ring by means of a first swivel joint. A second end of each rod is connected to the blade, or to a blade mounting structure, by means of a second swivel joint. A swivel joint is to be understood as a joint with two degrees of rotational freedom. A spherical plain bearing is one example of a suitable swivel joint.

The rods have a length and diameter that are suitable for supporting the blade, and the swivel joints allow a back and forth angular rotation of at least approximately 5 degrees, i.e. fine pitch angle adjustments. Depending on the design of the swivel joints, the rod connections may permit a greater range of angular rotation than 10 degrees, but in practice, the aforementioned range is sufficient.

As will be understood, the rods are particularly well suited for transmitting axial loads and for carrying the large bending moment due to the blade. The first swivel joints are provided at an outer annular section of the intermediate ring and the second joints are provided at the blade root. The "rod" bearing therefore has a large pitch diameter, but generates significantly less friction than e.g. a slewing bearing of the same diameter. The radius of the swivel joints is small in comparison with rod length. The sliding contact which takes place between the first and second rod ends and the first and second swivel joints takes place over a relatively small surface area. This reduces friction torque and wear.

The first bearing may also comprise more than three rods, with first and second swivel joints at each rod end. When, for example, the blade has a root diameter of approximately two metres and a length of 40 metres, 24 rods may used. As a result, the load per rod can be reduced, allowing the rods and corresponding first and second swivel joints to have a smaller diameter. Decreasing the load on each joint also reduces friction as a whole. Preferably, each rod is adjustable in length, to help ensure that each rod takes up a uniform share of the load.

The rods take up the axial forces and the bending moment of the blade. For supporting the radial load of the blade, the assembly in this embodiment further comprises a first radial bearing. Since the radial bearing does not need to support bending moment, it is possible to use a radial bearing which has a diameter much smaller than the diameter of the blade root.

Suitably, the hub comprises a central shaft extension and the blade comprises an appropriate mounting structure. The mounting structure may be an integral part of the blade, or may be a separate part to which the blade root is fixedly connected by means of e.g. bolts. The mounting structure preferably has a conical shape, and comprises a small-diameter ring part and a large-diameter ring part which are joined by a plurality of spokes. Suitably, the large-diameter ring part is provided with attachment heads for the second end of each rod. The small-diameter ring part is mounted to the central shaft extension of the hub via the first radial bearing. The first radial bearing may be a plain bearing or a roller bearing. As a result of its relatively small diameter, the radial bearing generates low friction torque.

Thus, an assembly according to the invention allows for decomposition of the forces into a high axial force and a relatively low radial force, such that an optimised, dedicated bearing solution can also be used for each type of force.

In the second mode of operation, the intermediate ring is rotatable relative to the hub via the second bearing arrangement. In one embodiment, the second bearing is a slewing bearing comprising e.g. two rows of rolling elements. The intermediate ring may be mounted to the hub via the slewing bearing. Preferably, the intermediate ring is provided with an integral raceway for one or more rolling elements, such that is serves as a ring of the slewing bearing. In one embodiment, the intermediate ring is the inner ring of the slewing bearing, whereby the outer ring of the slewing bearing is connected to the hub in a conventional manner.

Alternatively, the second bearing arrangement may comprise an axial plain bearing and a second radial bearing. In one example, the intermediate ring comprises a U-shaped section that surrounds a flange on the hub, whereby the two sides of the flange are retained between first and second sliding surfaces. In a further example, the intermediate ring may comprise sliding surfaces on opposite axial faces of the ring, which faces are clamped between two clamping members that are fixed to the hub.

The axial plain bearing has a diameter that is large enough to take up the axial loads and bending moment from the blade. The radial load of the intermediate ring is taken up by the second radial bearing, which has a diameter considerably smaller than that of the axial bearing. The intermediate ring then comprises a central section that is mounted to the hub extension by means of the second radial bearing. The second radial bearing may be the same bearing as the first radial bearing. Alternatively, the first and second radial bearings may be separate bearings.

The second bearing arrangement comprises a thrust bearing or a slewing bearing with a relatively large diameter (approximately equal to the blade root diameter). The large diameter and large bending moment to be supported means that a relatively large friction torque is generated. However, as mentioned, large angular adjustments in the second mode of operation occur relatively infrequently. The majority of blade rotation relative to the hub occurs via the first bearing arrangement, which generates considerably less friction torque. Therefore, an assembly according to the invention generates lower energy losses over its lifetime than a conventional wind turbine assembly.

To perform the pitch angle adjustments, the inventive assembly further comprises first actuation means for rotating the blade relative to the intermediate ring and hub, and comprises second actuation means for rotating the intermediate ring and blade relative to the hub. Thus, a further advantage of an assembly according to the invention is that the first actuation means can be optimally adapted for the high-frequency, short-stroke rotations in the first mode of operation. Likewise, the second actuation means can be optimally adapted, for the infrequent, long-stroke rotations in the second mode of operation.

The second actuation means may comprise a long-stroke motor with a pinion on its output shaft, which is mounted to the hub. The pinion engages with e.g. a ring gear on the intermediate ring. The first actuation means may comprise a short-stroke motor with a pinion on its output shaft. In one example, the short stroke motor is mounted to a platform on the blade mounting structure, and its pinion meshes with a different portion of the same ring gear on the intermediate ring, or with a dedicated toothed segment on the intermediate ring. Alternatively, the short-stroke motor may be mounted to the intermediate ring, whereby a toothed segment is provided on the blade mounting structure. In a further example, the second actuation means comprises a linear actuator with an extending and retracting piston. The piston may be coupled to e.g. a stud on the intermediate ring.

As demonstrated, an assembly according to the invention has several advantages. Other advantages of the present invention will become apparent from the detailed description and accompanying figures.

### BRIEF DESCRIPTION OF DRAWINGS

The invention will be described in greater detail in the following, with reference to the embodiment shown in the attached drawing, where
- Fig. 1: shows a cross-sectional view of an assembly according to the invention for rotational support of a wind turbine blade relative to a hub.
- Fig. 2: shows a perspective, schematic view of the assembly of Fig. 1, without the blade.
- Fig. 3: shows a further example of an assembly according to the invention
- Fig. 4: is a cross-sectional view of a still further example of an assembly according to the invention, and further shows an exploded detail from the cross-section.

### MODES FOR CARRYING OUT THE INVENTION

The embodiments of the invention with further developments described in the following are to be regarded only as examples and are in no way to limit the scope of the protection provided by the patent claims.

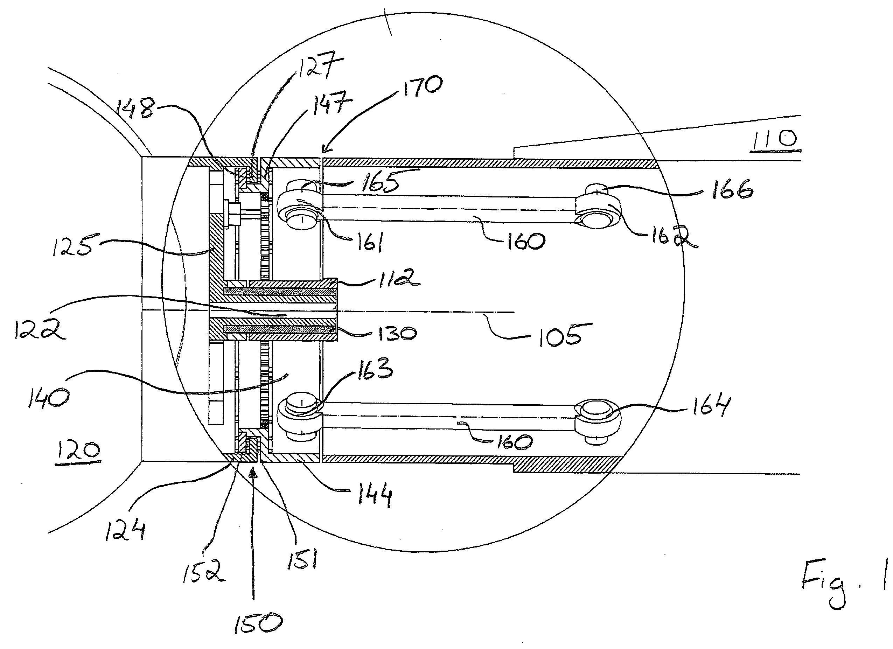

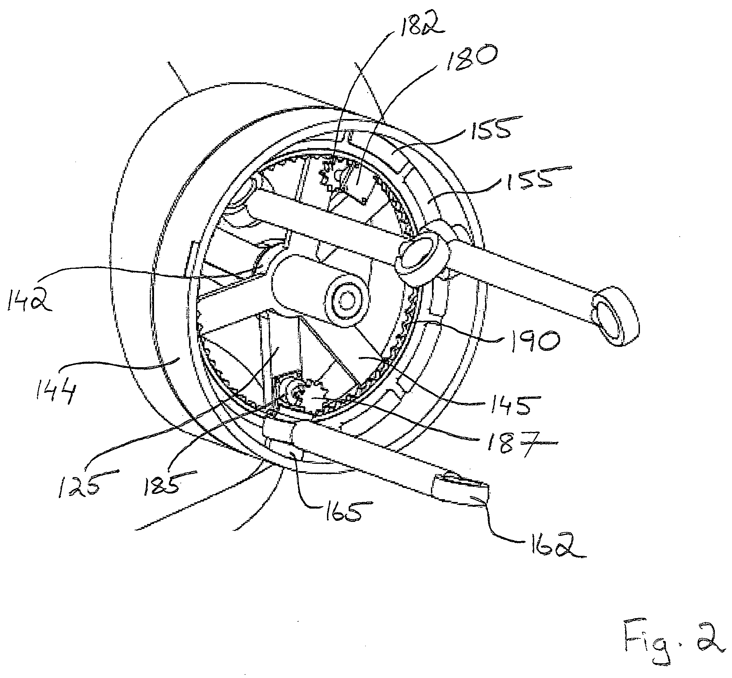

Fig. 1 and Fig. 2 show different views of an example of an assembly 100 according to the invention, adapted for rotational support of a wind turbine blade 110, relative to a wind turbine hub 120. In Fig. 1, a part of one blade 110 is shown mounted to an arm 124 of the hub 120. The hub itself is mounted on a main shaft, which has a main shaft axis perpendicular to an axis 105 of the rotational support. The generator of the wind turbine is centred on the main shaft axis, which is driven when the hub 120 is caused to rotate by wind striking blades attached to the hub. Typically, a wind turbine comprises three blades.

The assembly is configured for active pitch control, and the angle of each blade is adjustable relative to the hub. As explained previously, high-frequency, short stroke angular adjustments (up to approx. five degrees back and forth) are made in a first mode of operation. Large angular adjustments (through a maximum range of approx. 90 degrees) are made in a second mode of operation.

In an assembly according to the invention, the rotational support of the blade relative to the hub comprises a first bearing arrangement that is optimally adapted for the high-frequency, short stroke adjustments.

The assembly comprises an intermediate ring 140, mounted between the hub arm 124 and the blade 110. In the depicted example, the intermediate ring has an outer annular section 144, with a diameter essentially equal to the blade root diameter and the diameter of the hub arm 124. The blade is mounted to the intermediate ring via a first bearing arrangement, which comprises three rods 160. A first end 161 of each rod is attached to an inner circumference of the annular section 144 of the intermediate ring, by means of a first swivel joint 163. A second end 162 of each rod is attached to a blade mounting structure by means of a second swivel joint 164. The blade 110 is fixed to the mounting structure by means of e.g. 80 bolts.

In the depicted example, the first and second swivel joints 163, 164 are spherical plain bearings, which are provided at an inner circumference of each first rod end 161 and each second rod end 162. The first spherical plain bearings 163 are then mounted to a corresponding set of first attachment heads 165 on the intermediate ring and the second spherical plain bearings 164 are mounted to a corresponding set of second attachment heads 166 on the blade mounting structure. Suitably, the three first swivel joints and the three second swivel joints are spaced at equal intervals on the intermediate ring 140 and blade mounting structure respectively. The radius of contact in each swivel joint is small in relation to rod length, which has the advantage that a low friction torque is generated.

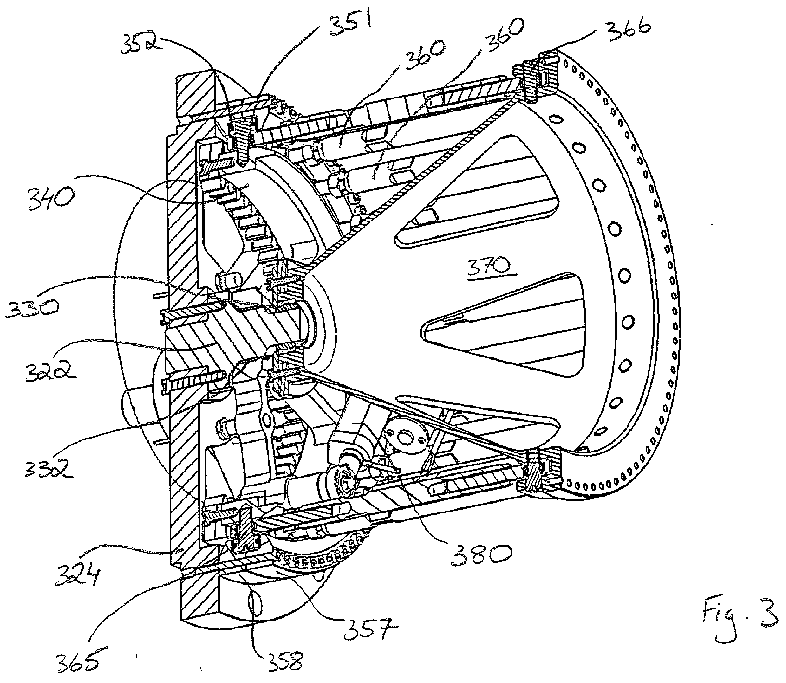

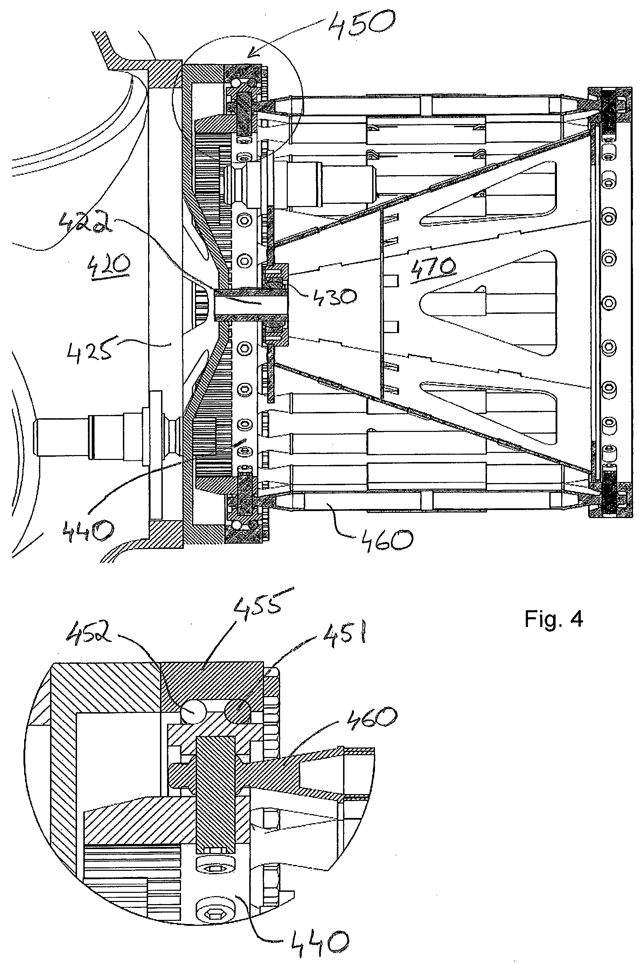

The first and second swivel joints 163, 164 allow rotation of the rods 160 in two degrees of freedom, meaning that the blade 110 is able to rotatable relative to the intermediate ring 140 by a limited amount. In some applications, three rod connections are preferred, as this arrangement is statically determinate and allows three degrees of freedom. A greater number of swivelling rod connections is also possible (See Figs 3 and 4). Typically the joints are designed to allow a back-and-forth angular adjustment of approx. 5 degrees in each direction. The relative angular displacement also causes an axial displacement of the blade relative to the intermediate ring. Suitably, the blade is mounted to the intermediate ring with a certain axial gap 170 in between, to allow for this axial displacement. A gap of e.g. 10 mm is sufficient when the rods 160 have a length of approximately two metres.

The axial forces acting on the turbine blade are transferred to the intermediate ring 140 via the rod connections. As will be understood, the rod connections between the blade 110 and intermediate ring 140 are excellently suited for taking up tensile and compressive loads (axial forces) and the blade bending moment. The axial forces are transmitted from the intermediate ring to the hub via an axial bearing 150, which will be described later.

The radial loads on the blade are transferred to the hub by a radial bearing, which may have a much smaller diameter. Suitably, the hub comprises a central, shaft-like extension 122, which is joined to the hub arm 124 by a plurality of hub spokes 125: e.g. three equally spaced spokes. Suitably, the blade mounting structure has a small-diameter ring part 112 that is joined to a large diameter ring part by a plurality of blade spokes (not shown). The mounting structure is thus essentially conical shape, whereby the second attachment heads 166 are provided on the large-diameter ring part. The small-diameter ring part 112 is mounted to the hub extension 122 via a radial bearing 130. In the depicted example, the radial bearing is a plain bearing. Due to the relatively small diameter of the plain bearing, a low friction torque is generated by this component.

In the second mode of operation, the intermediate ring is rotated relative to the hub, and forms part of the rotational support of the blade relative to the hub.

The intermediate ring 140 comprises an inner annular section 142, which is joined to the outer annular section 144 by a plurality of ring spokes 145; e.g. three ring spokes (see Fig. 2). The inner section 142 of the intermediate ring is mounted to the hub shaft 122 on the same radial plain bearing 130 that supports the small-diameter part 112 of the blade mounting structure. It is also possible to use a dedicated bearing for radial support of the intermediate ring 140. The intermediate ring 140 is additionally mounted to the hub 120 via the thrust bearing 150.

In the depicted example, an end of the hub arm 124 is provided with an inwardly extending flange 127. The intermediate ring 140 comprises a U-shaped section, adjacent to the outer annular section 144, whereby the flange 127 is retained between a first leg 147 and a second leg 148 of the U-shaped section. The thrust bearing 150 is provided on the U-shaped section, and comprises a first sliding surface 151 on the first leg 147 and a second sliding surface 152 on the second leg 148, which sliding surfaces 151 and 152 are in contact with the hub flange 127.

In a preferred embodiment, the first and second sliding surfaces are provided on a first and second set of individual sliding pads, as best shown in Fig. 2. In this figure, a side 155 of the first pads, opposite from the first sliding surface 151 is visible. The first pads are mounted through openings in the first leg 147 of the U-shaped section; the second pads are mounted through openings in the second leg. The advantage of individual sliding pads is that the pads can be replaced if the sliding surface becomes worn.

The second leg 148 is a separate part that is connected to the intermediate ring 140, after the blade and intermediate ring have been mounted over the hub extension 122. The second leg can be connected with a suitable preload or clearance, which is sufficient to axially retain the flange 127 between the legs of the U-section, but which allows rotation of the intermediate ring 140 (together with the blade) relative to the hub 120.

The assembly 100 further comprises first actuation means, for rotating the blade 110 relative to the hub 120 and intermediate ring 140 in the first mode of operation. The assembly also has second actuation means, for rotating the intermediate ring and blade relative to the hub.

In the depicted example, the first actuation means comprises a short-stroke motor 180 with a first pinion 182 on the output shaft. In Fig. 2, which shows a perspective view of the assembly without the blade, the motor 180 should be imagined as being attached to the blade mounting structure. For example, on one of the blade spokes. An inside circumference of the intermediate ring is provided with a ring gear 190, whereby the first pinion 182 meshes with teeth on a first section of the ring gear.

The second actuation means comprises a long-stroke motor 185 with a second pinion 187 on its output shaft. The long-stroke motor is mounted to the hub, on a hub spoke 125 in the depicted example. The second pinion meshes with teeth on a second section of the ring gear 190, which is preferably substantially opposite from the first section.

In the first mode of operation, for fine angular adjustment of the blade, the short-stroke motor 180 is activated. The first pinion 182 engages with the ring gear 190 on the intermediate ring 140. This causes rotation of the blade relative to the intermediate ring. In the second mode of operation, for large angular adjustments of the blade, the long-stroke motor 185 is activated. The second pinion 187 drivingly rotates the intermediate ring 140 via the ring gear 190. The first pinion 182 and short-stroke motor form a fixed coupling between the ring gear and the blade, meaning that rotation of the ring gear causes an equal rotation of the blade. Consequently, there is no relative rotation between the blade and the intermediate ring.

A further example of a rotational support according to the invention, comprising a first bearing arrangement with swivelling rod supports and a second bearing arrangement with a plain thrust bearing, is shown in Fig. 3. The intermediate ring 340 is mounted on the hub extension 322 via a bushing 332. In this example, the intermediate ring 340 comprises a flange that extends in a radially outward direction, whereby the first and second sliding surfaces 351, 352 of the thrust bearing are provided on axial faces of the flange. The first and second sliding surfaces are formed by a number of curved strips of sliding material which, when assembled, provide a continuous annular sliding surface. The sliding material is suitably a fibre-reinforced polymer material such as PA 6.6. with 15% PTFE and 30% glass fibres. The ring flange and sliding surfaces 351, 352 are clamped to a hub mounting member 324 by first and second clamp rings 357, 358.

The blade (not shown) is mounted to the hub and intermediate ring via a conical mounting structure 370. The small diameter end of the mounting structure 370 is mounted to the hub extension 322 via a dedicated radial bearing 330 in this example. The radial bearing is a non-located spherical bearing, meaning that axial displacement of the bearing can occur in response to the axial displacement of the mounting structure 370 caused when the rods are swivelled. Furthermore, the spherical design of the plain bearing does not constrain tilt, which prevents overconstraints. The large-diameter end of the mounting structure 370 comprises a series of attachment heads 366 for the second end of each rod 360 and swivel joint, while the intermediate ring is provided with a series of attachment heads 365 for the first end of each rod and swivel joint.

The first bearing arrangement comprises 24 rods in this example. The load on each rod and on each swivel joint is therefore less, in comparison with the embodiment of Figs. 1 and 2, meaning that rods and joints with a smaller diameter can be used. As a result, standard rod end connections can be used, which improves cost effectiveness. Furthermore, the reduced load per swivel joint decreases the overall friction torque. A disadvantage of more than 3 connections is that the arrangement is over-determined. Consequently, there is a risk that the load will not be evenly distributed over each rod. To counteract this drawback, the length of each rod is adjustable, which helps ensure that when the blade is attached, each rod takes up a uniform share of the load.

The intermediate ring 340 again comprises a ring gear 390 to enable driven rotation of the intermediate ring for relatively large pitch-angle adjustments. Fine pitch adjustments are made using a linear actuator 380. The actuator is mounted to a platform of the mounting structure 370 and the output piston is connected to a stud on the intermediate ring 330. The advantage of a linear actuator and corresponding connection is that the connection is less prone to wear than meshing gear teeth.

A still further example of a rotational support according to the invention is depicted in Figure 4. The first bearing arrangement is largely similar to that of Fig. 3, and comprises twenty-four rods 460 which interconnect an intermediate ring 440 and a blade mounting structure 470 via a swivel joint at each rod end. A hub base plate 425 comprising a central hub extension 422 is attached to the hub 420, whereby the small-diameter part of the conical mounting structure is supported on the hub extension 422 by a non-located spherical plain bearing. 430.

The second bearing arrangement in this example is a slewing bearing 450, comprising an inner ring and outer ring 455, with first and second rows 451, 452 of rolling elements disposed therebetween. In this example, an outer circumference of the intermediate ring 440 is provided with first and second raceways for the first and second rows of rolling elements 451, 452. In other words, the intermediate ring 440 serves as the bearing inner ring. Since the slewing bearing is used for large positional adjustments in the second mode of operation, and not for high-frequency, short-stroke adjustments in the first mode of operation, a much higher fatigue life is achieved in comparison with the slewing bearings used in conventional wind turbines.

The invention is not to be regarded as being limited to the embodiments described above, a number of additional variants and modifications being possible within the scope of the subsequent patent claims.

## Claims

1. Assembly comprising a wind turbine blade (110) rotationally supported relative to a wind turbine hub (120, 320, 420) by means of a first bearing arrangement and a second bearing arrangement, wherein the assembly comprises an intermediate ring (140, 340, 440) axially positioned between the hub (120, 320, 420) and the blade (110), whereby in a first mode of operation, the blade is rotatable relative to the intermediate ring (140, 340, 440) via the first bearing arrangement, and whereby in a second mode of operation, the intermediate ring (140, 340, 440) and the blade (110) are rotatable relative to the hub via the second bearing arrangement, **characterized in that** the first bearing arrangement comprises at least three rods (160, 360, 460), whereby a first end (161) of each rod is in connection with the intermediate ring (140, 340, 440) via a first swivel joint (163) and a second end (162) of each rod is in connection with the blade via a second swivel joint (164).

2. Assembly according to claim 1, wherein the first and second swivel joints are formed by spherical plain bearings.

3. Assembly according to claim 1 or 2, wherein the first bearing arrangement comprises more than three rods (160, 360, 460).

4. Assembly according to claim 3, wherein at least one of the rods (160, 360, 460) is adjustable in length.

5. Assembly according to any preceding claim, wherein the first bearing arrangement comprises a first radial bearing (130, 330, 430), which is mounted on a central extension (122, 322, 422) of the hub.

6. Assembly according to claim 5, further comprising a blade mounting structure (370, 470), wherein a small-diameter ring part of the blade mounting structure is supported on the hub extension (122, 322, 422) by the first radial bearing (130, 330, 430), and a large diameter ring part of the blade mounting structure comprises attachment heads (166, 366) for the second rod ends (162) and second swivel joints (164).

7. Assembly according to any preceding claim, wherein the second bearing arrangement comprises a slewing bearing (450).

8. Assembly according to claim 7, wherein the intermediate ring (440) comprises a raceway for rolling elements, and serves as a rotatable ring of the slewing bearing.

9. Assembly according to any of claims 1 to 6, wherein the second bearing arrangement comprises an axial bearing (150) having a first sliding surface (151, 351) and a second sliding surface (152, 352) provided on the intermediate ring (140, 340).

10. Assembly according to claim 9, wherein the intermediate ring comprises a U-shaped section having a first leg (147) and a second leg (148), and the hub comprises an inwardly extending flange (127); the first sliding surface (151) being provided on the first leg and the second sliding surface (152) being provided on the second leg, such that the flange (127) is axially retained between the first and second sliding surfaces.

11. Assembly according to claim 9, wherein the intermediate ring (140, 340) comprises a ring flange that extends in a radially outward direction, the first sliding surface (351) being provided on a first axial face of the ring flange and the second sliding surface (352) being provided on a second axial face of the ring flange, and wherein the ring flanges is clamped to the hub between first and second clamp rings (357, 358).

12. Assembly according to claim 10 or 11, wherein the second bearing arrangement comprises a second radial bearing (332) for supporting the intermediate ring.

13. Assembly according to any preceding claim, the assembly further comprising first actuation means (180, 182, 380) for rotating the blade (110) relative to the intermediate ring (140, 340, 440) and the hub (120, 320, 420) in the first mode of operation, and comprising second actuation means (185, 187) for rotating the intermediate ring and the blade relative to the hub in the second mode of operation.

## Patentansprüche

1. Baugruppe, die eine Windturbinenschaufel (110) umfasst, die im Verhältnis zu einer Windturbinennabe (120, 320, 420) mittels einer ersten Lageranordnung und einer zweiten Lageranordnung drehbar abgestützt ist, wobei die Baugruppe einen Zwischenring (140, 340, 440) umfasst, der axial zwischen der Nabe (120, 320, 420) und der Schaufel (110) positioniert ist, wobei die Schaufel in einem ersten Betriebsmodus im Verhältnis zum Zwischenring (140, 340, 440) über die erste Lageranordnung drehbar ist, und wobei der Zwischenring (140, 340, 440) und die Schaufel (110) in einem zweiten Betriebsmodus im Verhältnis zur Nabe über die zweite Lageranordnung drehbar sind, **dadurch gekennzeichnet, dass** die erste Lageranordnung mindestens drei Stäbe (160, 360, 460) umfasst, wobei ein erstes Ende (161) eines jeden Stabes über ein erstes Drehgelenk (163) mit dem Zwischenring (140, 340, 440) verbunden ist und ein zweites Ende (162) eines jeden Stabes über ein zweites Drehgelenk (164) mit der Schaufel verbunden ist.

2. Baugruppe nach Anspruch 1, bei der das erste und das zweite Drehgelenk durch Gelenklager gebildet sind.

3. Baugruppe nach Anspruch 1 oder 2, bei der die erste Lageranordnung mehr als drei Stäbe (160, 360, 460) umfasst.

4. Baugruppe nach Anspruch 3, bei der mindestens einer der Stäbe (160, 360, 460) in der Länge einstellbar ist.

5. Baugruppe nach einem der vorstehend aufgeführten Ansprüche, bei der die erste Lageranordnung ein erstes Radiallager (130, 330, 430) umfasst, das an einer zentralen Erstreckung (122, 322, 422) der Nabe montiert ist.

6. Baugruppe nach Anspruch 5, die weiterhin eine Schaufelmontagekonstruktion (370, 470) umfasst, wobei ein einen kleinen Durchmesser aufweisendes Ringteil der Schaufelmontagekonstruktion durch das erste Radiallager (130, 330, 430) an der Nabenerstreckung (122, 322, 422) abgestützt ist, und wobei ein einen großen Durchmesser aufweisendes Ringteil der Schaufelmontagekonstruktion Befestigungsköpfe (166, 366) für die zweiten Stabenden (162) und die zweiten Drehgelenke (164) umfasst.

7. Baugruppe nach einem der vorstehend aufgeführten Ansprüche, bei der die zweite Lageranordnung ein Großwälzlager (450) umfasst.

8. Baugruppe nach Anspruch 7, bei der der Zwischenring (440) eine Laufbahn für Rollelemente umfasst und als ein drehbarer Ring des Großwälzlagers dient.

9. Baugruppe nach einem der Ansprüche 1 bis 6, bei der die zweite Lageranordnung ein Axiallager (150) mit einer ersten Gleitfläche (151, 351) und einer zweiten Gleitfläche (152, 352) am Zwischenring (140, 340) umfasst.

10. Baugruppe nach Anspruch 9, bei der der Zwischenring einen U-förmigen Bereich mit einem ersten Schenkel (147) und einem zweiten Schenkel (148) umfasst und die Nabe einen sich nach innen erstreckenden Flansch (127) umfasst, wobei die erste Gleitfläche (151) am ersten Schenkel und die zweite Gleitfläche (152) am zweiten Schenkel so vorgesehen ist, dass der Flansch (127) zwischen der ersten und der zweiten Gleitfläche axial zurückgehalten wird.

11. Baugruppe nach Anspruch 9, bei der der Zwischenring (140, 340) einen Ringflansch umfasst, der sich in einer radial nach außen verlaufenden Richtung erstreckt, wobei die erste Gleitfläche (351) an einer ersten axialen Fläche des Ringflansches und die zweite Gleitfläche (352) an einer zweiten axialen Fläche des Ringflansches vorgesehen ist, und wobei der Ringflansch zwischen dem ersten und dem zweiten Klemmring (357, 358) mit der Nabe verklemmt ist.

12. Baugruppe nach Anspruch 10 oder 11, bei der die zweite Lageranordnung ein zweites Radiallager (332) zur Abstützung des Zwischenrings umfasst.

13. Baugruppe nach einem der vorstehend aufgeführten Ansprüche, wobei die Baugruppe weiterhin erste Betätigungsmittel (180, 182, 380) zur Drehung der Schaufel (110) im Verhältnis zum Zwischenring (140, 340, 440) und zur Nabe (120, 320, 420) im ersten Betriebsmodus sowie zweite Betätigungsmittel (185, 187) zur Drehung des Zwischenrings und der Schaufel im Verhältnis zur Nabe im zweiten Betriebsmodus umfasst.

## Revendications

1. Ensemble comprenant une pale d'éolienne (110) supportée de façon rotative sur un moyeu d'éolienne (120, 320, 420) au moyen d'un premier agencement de palier et d'un deuxième agencement de palier, dans lequel l'ensemble comprend un anneau intermédiaire (140, 340, 440) positionné axialement entre le moyeu (120, 320, 420) et la pale (110), dans lequel, dans un premier mode de fonctionnement, la pale est rotative par rapport à l'anneau intermédiaire (140, 340, 440) par l'intermédiaire du premier agencement de palier et dans lequel, dans un deuxième mode de fonctionnement, l'anneau intermédiaire (140, 340, 440) et la pale (110) sont rotatifs par rapport au moyeu par l'intermédiaire du deuxième agencement de palier, **caractérisé en ce que** le premier agencement de palier comprend au moins trois tiges (160, 360, 460), dans lequel une première extrémité (161) de chaque tige est en connexion avec l'anneau intermédiaire (140, 340, 440) par l'intermédiaire d'un premier raccord tournant (163), et une deuxième extrémité (162) de chaque tige est en connexion avec la pale par l'intermédiaire d'un deuxième raccord tournant (164).

2. Ensemble selon la revendication 1, dans lequel les premier et deuxième raccords tournants sont formés par des paliers lisses sphériques.

3. Ensemble selon la revendication 1 ou 2, dans lequel le premier agencement de palier comprend plus de trois tiges (160, 360, 460).

4. Ensemble selon la revendication 3, dans lequel au moins une des tiges (160, 360, 460) est réglable en longueur.

5. Ensemble selon l'une quelconque des revendications précédentes, dans lequel le premier agencement de palier comprend un premier palier radial (130, 330, 430), qui est monté sur une extension centrale (122, 322, 422) du moyeu.

6. Ensemble selon la revendication 5, comprenant en outre une structure de montage de pale (370, 470), dans lequel une partie d'anneau de petit diamètre de la structure de montage de pale est supportée sur l'extension de moyeu (122, 322, 422) par le premier palier radial (130, 330, 430), et une partie d'anneau de grand diamètre de la structure de montage de pale comprend des têtes de fixation (166, 366) pour les deuxièmes extrémités de tige (162) et les deuxièmes raccords tournants (164).

7. Ensemble selon l'une quelconque des revendications précédentes, dans lequel le deuxième agencement de palier comprend un palier pivotant (450).

8. Ensemble selon la revendication 7, dans lequel l'anneau intermédiaire (440) comprend un chemin de roulement pour des éléments roulants, et sert d'anneau rotatif du palier pivotant.

9. Ensemble selon l'une quelconque des revendications 1 à 6, dans lequel le deuxième agencement de palier comprend un palier axial (150) présentant une première surface coulissante (151, 351) et une deuxième surface coulissante (152, 352) prévues sur l'anneau intermédiaire (140, 340).

10. Ensemble selon la revendication 9, dans lequel l'anneau intermédiaire comprend une section en forme de U présentant une première branche (147) et une deuxième branche (148), et le moyeu comprend une bride s'étendant vers l'intérieur (127); la première surface coulissante (151) étant prévue sur la première branche et la deuxième surface coulissante étant prévue (152) étant prévue sur la deuxième branche, de telle sorte que la bride (127) soit retenue axialement entre les première et deuxième surfaces coulissantes.

11. Ensemble selon la revendication 9, dans lequel l'anneau intermédiaire (140, 340) comprend une bride annulaire qui s'étend dans une direction radialement vers l'extérieur, la première surface coulissante (351) étant prévue sur une première face axiale de la bride annulaire et la deuxième surface coulissante (352) étant prévue sur une deuxième face axiale de la bride annulaire, et dans lequel les brides annulaires sont serrées sur le moyeu entre des première et deuxième bagues de serrage (357, 358).

12. Ensemble selon la revendication 10 ou 11, dans lequel le deuxième agencement de palier comprend un deuxième palier radial (332) pour supporter l'anneau intermédiaire.

13. Ensemble selon l'une quelconque des revendications précédentes, l'ensemble comprenant en outre des premiers moyens d'actionnement (180, 182, 380) pour faire tourner la pale (110) par rapport à l'anneau intermédiaire (140, 340, 440) et au moyeu (120, 320, 420) dans le premier mode de fonctionnement, et comprenant des deuxièmes moyens d'actionnement (185, 187) pour faire tourner l'anneau intermédiaire et la pale par rapport au moyeu dans le deuxième mode de fonctionnement.
